# EUROPEAN PATENT SPECIFICATION

(11) **EP 2 602 846 B1**
(45) Date of publication and mention of the grant of the patent: **02.08.2017**
(21) Application number: 12803961.7
(22) Date of filing: 29.06.2012
(51) Int. Cl.: H01M 2/30, H01M 2/32

(54) **ELECTRODE TERMINAL FOR SECONDARY BATTERY AND LITHIUM SECONDARY BATTERY COMPRISING SAME**
ELEKTRODENANSCHLUSS FÜR SEKUNDÄRBATTERIEN UND LITHIUMSEKUNDÄRBATTERIE DAMIT
TERMINAL D'ÉLECTRODE POUR BATTERIE SECONDAIRE ET BATTERIE SECONDAIRE AU LITHIUM COMPRENANT UN TEL ENSEMBLE

(30) Priority: 30.06.2011 KR 20110064783
(43) Date of publication of application: 12.06.2013
(73) Proprietor: LG Chem, Ltd., Seoul 150-721 (KR)
(72) Inventor: KIM, Bo Hyun, Daejeon 305-340 (KR); LEE, Han Ho, Seoul 156-773 (KR); CHAE, Jong Hyun, Daejeon 305-509 (KR); KIM, Dae Il, Daejeon 305-509 (KR); LEE, Joong Min, Gunpo-si Gyeonggi-do 435-772 (KR)
(74) Representative: Cabinet Plasseraud
(86) International application number: PCT/KR2012/005196
(87) International publication number: WO 2013/002607

(56) References cited:
- WO-A1-2010/073827
- CN-A- 102 024 976
- JP-A- H1 167 281
- JP-A- 2000 215 879
- JP-A- 2001 093 491
- JP-A- 2009 099 527
- KR-B1- 100 871 917
- KR-B1- 101 029 821
- US-A- 6 001 506

## Description

### Technical Field

This application claims priority from Korean Patent Application No. 10-2011-0064783 filed with Korean Intellectual Property Office on June 30, 2011, the entire contents of which are incorporated herein by reference.

The present invention disclosed herein relates to an electrode terminal for a secondary battery, and a lithium secondary battery including the electrode terminal.

### Background Art

Interest in energy storage technologies has recently been increasingly higher. Efforts to study and develop electrochemical devices are gradually taking concrete shape as application fields of the energy storage technologies not only expand to energy sources for cellular phones, camcorders and notebook personal computers (PC), but also expand to those for electric cars. The electrochemical devices are the most noteworthy field in this respect, and development of rechargeable secondary batteries among the electrochemical devices is becoming the focus of attention. Research and development have recently been worked on design of new electrodes and batteries in order to improve capacity density and specific energy in the development of such batteries.

Lithium secondary batteries developed in the early 1990s among currently applicable secondary batteries are in the spotlight due to their merits of high operating voltages and far large energy densities compared to typical batteries such as Ni-MH batteries, Ni-Cd batteries, and sulfuric acid-lead batteries using aqueous electrolyte solutions.

Lithium metals, lithium alloys, stannum oxides, and carbon materials such as graphite and coke are suggested as metals used to form a negative electrode of a lithium secondary battery. Of these, carbon materials are already been commercialized to form a negative electrode of a lithium secondary battery. Since graphite has a significantly low discharge potential near the electric potential of a lithium metal, and can be used to form a lithium secondary battery having high energy density, graphite is widely used to form a negative electrode.

A positive electrode terminal of such lithium secondary batteries is formed of aluminum. This is because when a lithium secondary battery is charged and discharged, aluminum is stable at the electric potential of a positive electrode. Although titanium and stainless steel are also stable in electric potential, aluminum is most widely used in consideration of workability, conductivity, and material costs.

However, since aluminum tends to form an oxide thin layer, when aluminum is used to form a positive electrode terminal, a portion of the positive electrode terminal, exposed out of an exterior member of a lithium secondary battery to connect to an electrode lead, may be corroded. Particularly, when a lithium secondary battery is used in a salty area, the corrosion of a positive electrode terminal is accelerated to thereby increase contact resistance of a connecting portion of the positive electrode terminal, which causes a contact failure or decreases a discharge voltage. WO 2010/073827 A1 discloses a lithium secondary battery comprising nickel plated anode and cathode terminals.

JP 2001 093491 A discloses a secondary battery in which the electrode terminals are gold plated in order to provide a better oxidation resistance , especially for the aluminum current collector tab.

CN 102 024 976 discloses a battery stack comprising coated electrode terminals for better electrical connection.

### Disclosure

### Technical Problem

The present invention provides a lithium secondary battery according to claim 1, including an electrode terminal, in which a portion of the electrode terminal exposed out of an exterior member of the secondary battery is entirely plated with a corrosion resistant metal to prevent the electrode terminal from being corroded by a salty material, thereby improving anti-fatigue performance and adhesion force of a welding portion, and functioning as a high strength and high power terminal.

### Technical Solution

Embodiments of the present invention provide electrode terminals for a secondary battery, including a metal having higher corrosion resistance than that of a metal constituting the electrode terminal, wherein the electrode terminal is plated with the metal having the higher corrosion resistance.

In other embodiments of the present invention, lithium secondary batteries include: a rechargeable electrode assembly sealed within an exterior member; and an electrode terminal (a positive electrode terminal or a negative electrode terminal) electrically connected to the electrode assembly, and partially protruded out of the exterior member, wherein the electrode terminal includes a metal having higher corrosion resistance than that of a metal constituting the electrode terminal, and the electrode terminal is plated with the metal having the higher corrosion resistance.

In some embodiments, the electrode terminal may be formed of aluminum. The electrode terminal may be plated with at least one selected from the group consisting of cobalt, copper, nickel, platinum, manganese, zinc, iron, stannum, silver, and gold, which have higher corrosion resistance than that of aluminum.

In other embodiments, the electrode terminal may be formed of copper. The electrode terminal may be plated with at least one selected from the group consisting of nickel, platinum, silver, and gold, which have higher corrosion resistance than that of copper.

In still other embodiments, the plating of the electrode terminal may be electrolytic plating or non-electrolytic plating. A portion of the electrode terminal exposed out of the exterior member of the lithium secondary battery is plated with the metal.

In further embodiments, the lithium secondary battery may be a pouch type secondary battery.

In still other embodiments of the present invention, battery modules or battery packs include: two or more lithium secondary batteries electrically connected to each other therein, wherein at least one portion of an electrode terminal (a positive electrode terminal or a negative electrode terminal) electrically connecting the lithium secondary battery to an outside thereof is plated with a metal having higher corrosion resistance than that of a metal constituting the electrode terminal.

### Advantageous Effects

According to the embodiments, an electrode terminal is directly plated with a corrosion resistant metal such as cobalt, copper, nickel, and platinum to improve corrosion resistance thereof, thereby improving the performance of a lithium secondary battery. Along with the plating of the electrode terminal, a battery pack in which the lithium secondary battery is provided at least in two can be improved in design.

### Description of Drawings

FIG. 1 is a schematic view illustrating an electrode terminal for a lithium secondary battery according to an embodiment of the present invention.
FIG. 2 is an exploded perspective view illustrating a pouch type secondary battery according to another embodiment of the present invention.
FIG. 3 is a perspective view illustrating the pouch type secondary battery of FIG. 2.
FIG. 4 is an exploded perspective view illustrating a pouch type secondary battery according to another embodiment of the present invention.
FIG. 5 is a perspective view illustrating the pouch type secondary battery of FIG. 4.

### Detailed Description of Preferred Embodiment

Hereinafter, an electrode terminal for a secondary battery, and a lithium secondary battery including the electrode terminal according to embodiments of the present invention will be described in detail with reference to the accompanying drawings.

The electrode terminal is plated with a metal that has higher corrosion resistance than that of a metal constituting the electrode terminal. The lithium secondary battery includes: a rechargeable electrode assembly sealed within an exterior member; and the above electrode terminal (as a positive or a negative electrode terminal), wherein the electrode terminal includes a metal having higher corrosion resistance than that of a metal constituting the electrode terminal, and the electrode terminal is plated with the metal having the higher corrosion resistance. The electrode terminal is electrically connected to the electrode assembly, and partially protrudes out of the exterior member.

A lithium secondary battery according to an embodiment of the present invention includes a rechargeable electrode assembly and an electrode terminal (a positive or negative electrode terminal) 10. The electrode assembly is sealed within an exterior member including a laminate sheet having a resin layer and a metal layer. The electrode terminal 10 is electrically connected to the electrode assembly, and partially protrudes out of the exterior member to connect to an external terminal. An insulating film 20 may be attached to the electrode terminal 10.

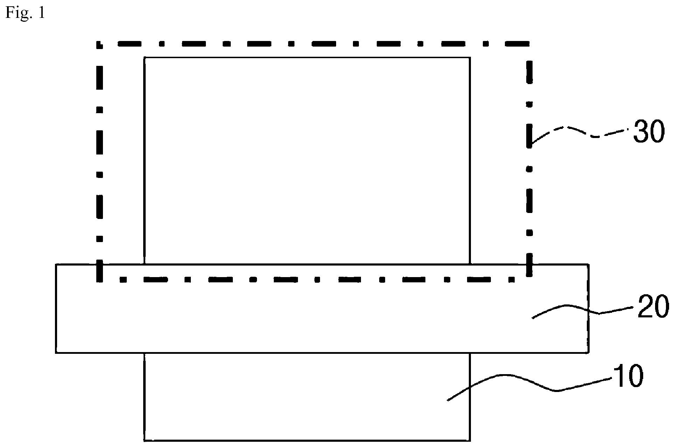

Referring to FIG. 1, the electrode terminal 10 leading out from an electrode of the lithium secondary battery is electrically connected to the electrode assembly, and an exposed portion (in a region 30 depicted with a dot-dash line) of the electrode terminal exposed out of the exterior member is entirely plated with a metal that has higher corrosion resistance than that of the electrode terminal.

Since the corrosion resistance of a metal is varied according to potential differences and environmental conditions such as temperature, concentration, and atmosphere (oxidation atmosphere or reduction atmosphere), 'a metal having higher corrosion resistance than that of a metal constituting an electrode terminal' described herein means a metal having a smaller corroded amount per unit time under the same potential difference and the same environmental conditions than that of a metal constituting an electrode terminal. For example, when being immersed in salt water with the same temperature and concentration for a certain period of time, a metal having a smaller corroded amount than that of a metal constituting an electrode terminal can be used as a metal for the plating.

Particularly, a positive electrode terminal is formed of aluminum in consideration of workability, conductivity, and costs, and aluminum may be corroded by reacting with a salty material. Thus, a positive electrode terminal exposed out of an exterior member should be plated with a corrosion resistant metal.

The corrosion resistant metal may be any metal that has higher corrosion resistance than that of aluminum and that is appropriate for plating. For example, when an electrode terminal is formed of aluminum, at least one selected from the group consisting of cobalt, nickel, platinum, manganese, zinc, iron, stanuum, silver, and gold may be used to plate the electrode terminal.

When a negative electrode terminal is formed of copper, at least one selected from the group consisting of nickel, platinum, silver, and gold, which have higher corrosion resistance than that of copper, may be used to plate the negative electrode terminal, but metals used to plate a negative electrode terminal are not limited thereto.

A metal used to plate the electrode terminal may be lower in degree of ionization than a metal used to form the electrode terminal.

An electrode terminal plated with a corrosion resistant metal according to the present invention has higher corrosion resistance by about 5% to about 20% than that of a typical electrode terminal.

Any plating method may be used to entirely plate a portion of an electrode terminal protruding out of an exterior member. For example, electrolytic plating or non-electrolytic plating may be used.

When the electrolytic plating (electroplating) is used to plate an aluminum positive electrode terminal or a negative electrode terminal, a plating target portion is not specifically limited, and thus, at least one portion of the positive or negative electrode terminal may be plated with a metal. For example, only a portion protruded (exposed) out of an exterior member of a battery may be plated.

In this case, a plating process is simplified, and the service life of a plating solution is increased, and the management thereof is facilitated. In addition, a plating speed is increased, and adhesion force to a base material is increased. Furthermore, resistance applied to the outside of a battery can be lower when a portion of an electrode terminal is plated than when an electrode is entirely plated, and material costs can be further decreased.

When a positive electrode terminal or a negative electrode terminal is partially plated with using the non-electrolytic plating, a partially plated portion has a uniform thickness unlike using the electrolytic plating (electroplating). At this point, when the thickness of the partially plated portion is about 125 µm or smaller, it is unnecessary to grind the surface of the partially plated portion.

As described above, the lithium secondary battery includes a positive electrode terminal and/or a negative electrode terminal, which is plated with a metal having higher corrosion resistance than that of a material constituting the positive electrode terminal and/or the negative electrode terminal. Only a protruded portion of the positive electrode terminal and/or the negative electrode terminal out of the lithium secondary battery is plated, as described above.

When an electrode terminal is taped with an insulating film, order of the above-described plating and the taping of the electrode terminal is not specifically limited. For example, plating of an electrode terminal may be followed by taping thereof.

The form of the electrode assembly included in the lithium secondary battery is not specifically limited, and thus, the electrode assembly may be one of various electrode assemblies such as a stack type one, a jelly-roll type one, a stack & folding type one that is wound in one direction, and a Z-stack & folding type one that is wound in zigzag shape.

Furthermore, the electrode assembly may be a unidirectional electrode assembly including positive and negative electrode terminals protruding in the same direction, or be a bidirectional electrode assembly including positive and negative electrode terminals protruding in different directions.

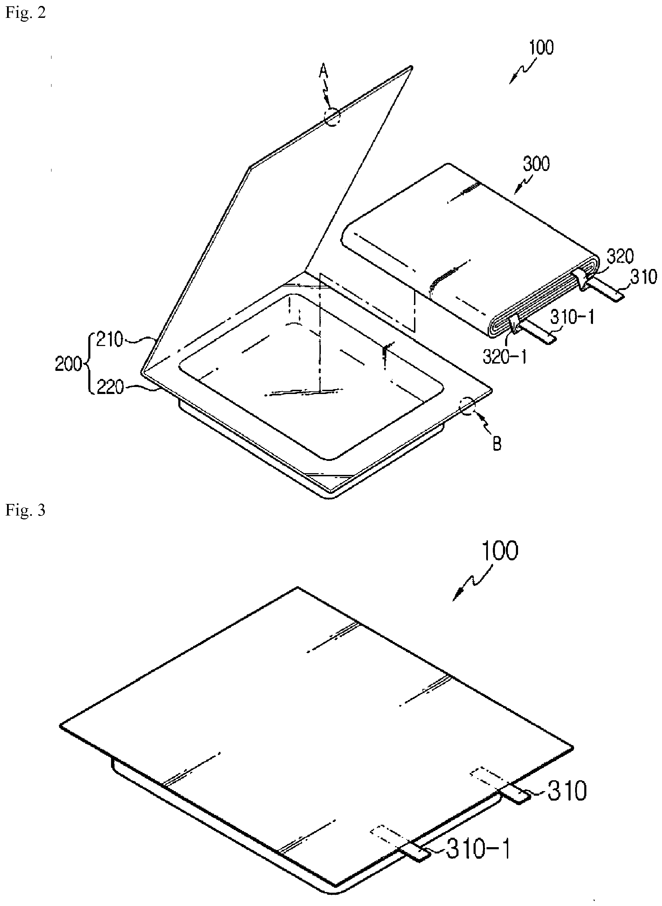

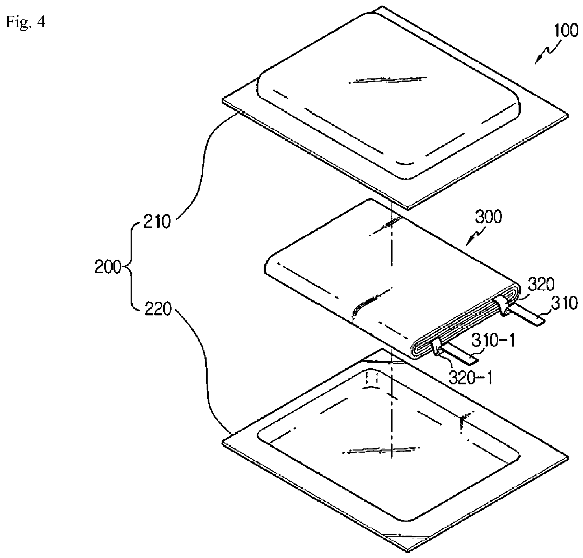

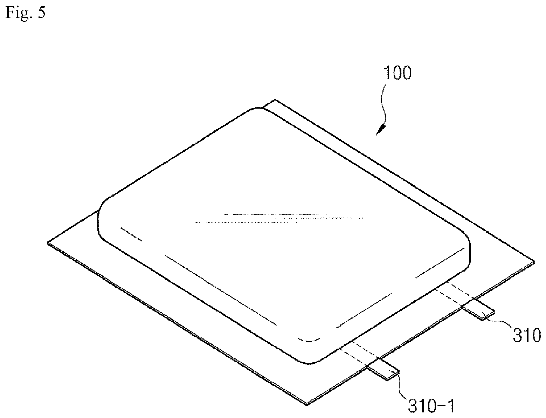

Referring to FIGS. 2 and 3, a lithium secondary battery 100 according to another embodiment of the present invention may include a pouch type exterior member 200 that includes an upper exterior member 210 and a lower exterior member 220 which are connected to each other. An accommodating part may be disposed in only the lower exterior member 220 to accommodate an electrode assembly 300. Alternatively, referring to FIGS. 4 and 5, a lithium secondary battery according to another embodiment of the present invention may include a pouch type exterior member 200 that includes an upper exterior member 210 and a lower exterior member 220 which are separated from each other. Accommodating parts may be disposed in both the upper exterior member 210 and the lower exterior member 220 to accommodate an electrode assembly 300.

According to embodiments of the present invention, shapes and manufacturing methods of an electrode assembly including an electrode terminal, and shapes and manufacturing methods of a pouch type lithium secondary battery including the electrode assembly are not specifically limited. Thus, the electrode assembly and the pouch type lithium secondary battery may be manufactured using well known methods.

Furthermore, the electrode terminal may be used not only in a lithium secondary battery, but also as an electrode lead of a battery module or battery pack including two or more lithium secondary batteries electrically connected to each other.

It will be understood that although the terms "upper (or equivalents thereof)" and "lower (or equivalents thereof)" are used herein to relatively discriminate elements from one another and to efficiently describe them, these terms should not be construed as absolutely discriminating elements from one another in terms of physical positions, relative positions, and importance.

While the present invention has been particularly shown and described with reference to exemplary embodiments thereof, it will be understood by those of ordinary skill in the art that various changes in form and details may be made therein without departing from the scope of the present invention as defined by the following claims.

### Symbol of Each of the Elements in the Figures

- 10:: a electrode terminal
- 20:: a insulating film
- 30:: a plated region
- 100:: a lithium secondary battery
- 200:: a pouch type exterior member
- 210:: an upper exterior member
- 220:: a lower exterior member
- 300:: an electrode assembly
- 310, 310-1:: a electrode terminal

## Claims

1. A lithium secondary battery comprising:
a rechargeable electrode assembly sealed within an exterior member; and
an electrode terminal (a positive electrode terminal or a negative electrode terminal) electrically connected to the electrode assembly, and partially protruded out of the exterior member forming a portion exposed out of the exterior member,
wherein the electrode terminal comprises a metal having higher corrosion resistance than that of a metal constituting the electrode terminal,
**characterized in that** only the portion of the electrode terminal exposed out of the exterior member of the lithium secondary battery is entirely plated with the metal having the higher corrosion resistance.

2. The lithium secondary battery of claim 1, wherein the electrode terminal is formed of aluminum.

3. The lithium secondary battery of claim 2, wherein the electrode terminal is plated with at least one selected from the group consisting of cobalt, copper, nickel, platinum, manganese, zinc, iron, stannum, silver, and gold, which have higher corrosion resistance than that of aluminum.

4. The lithium secondary battery of claim 1, wherein the electrode terminal is formed of copper.

5. The lithium secondary battery of claim 4, wherein the electrode terminal is plated with at least one selected from the group consisting of nickel, platinum, silver, and gold, which have higher corrosion resistance than that of copper.

6. The lithium secondary battery of any one of claims 1 to 5, wherein the lithium secondary battery is a pouch type secondary battery.

7. A battery module or a battery pack, comprising:
two or more lithium secondary batteries according to claims 1 to 6, electrically connected to each other therein.

## Patentansprüche

1. Lithium-Sekundärbatterie, mit:
einer wiederaufladbaren Elektrodenanordnung, die innerhalb eines äußeren Elements abgedichtet ist; und
einem Elektrodenanschluss (ein Positive-Elektrode-Anschluss oder ein Negative-Elektrode-Anschluss), der mit der Elektrodenanordnung elektrisch verbunden ist, und teilweise aus dem äußeren Element vorsteht, einen Abschnitt ausbildend, der aus dem äußeren Element freiliegt,
wobei der Elektrodenanschluss ein Metall mit einem höheren Korrosionswiderstand als derjenige eines Metalls aufweist, das den Elektrodenanschluss bildet,
**dadurch gekennzeichnet, dass** lediglich der Abschnitt des Elektrodenanschlusses, der aus dem äußeren Element der Lithium-Sekundärbatterie freiliegt, mit dem Metall, das den höheren Korrosionswiderstand aufweist, vollständig plattiert ist.

2. Lithium-Sekundärbatterie nach Anspruch 1, wobei der Elektrodenanschluss aus Aluminium ausgebildet ist.

3. Lithium-Sekundärbatterie nach Anspruch 2, wobei der Elektrodenanschluss mit zumindest einem plattiert ist, das aus der Gruppe ausgewählt ist, die aus Kobalt, Kupfer, Nickel, Platin, Mangan, Zink, Eisen, Zinn, Silber und Gold besteht, welche einen höheren Korrosionswiderstand als derjenige von Aluminium aufweisen.

4. Lithium-Sekundärbatterie nach Anspruch 1, wobei der Elektrodenanschluss aus Kupfer ausgebildet ist.

5. Lithium-Sekundärbatterie nach Anspruch 4, wobei der Elektrodenanschluss mit zumindest einem plattiert ist, das aus der Gruppe ausgewählt ist, die aus Nickel, Platin, Silber und Gold besteht, welche einen höheren Korrosionswiderstand als derjenige von Kupfer aufweisen.

6. Lithium-Sekundärbatterie nach einem der Ansprüche 1 bis 5, wobei die Lithium-Sekundärbatterie eine beutelartige Sekundärbatterie ist.

7. Batteriemodul oder Batteriepack, mit:
zwei oder mehr Lithium-Sekundärbatterien gemäß den Ansprüchen 1 bis 6, die darin elektrisch miteinander verbunden sind.

## Revendications

1. Batterie secondaire au lithium comprenant :
un ensemble d'électrodes rechargeables scellé à l'intérieur d'un organe extérieur ; et
une borne d'électrode (une borne d'électrode positive ou une borne d'électrode négative) raccordée électriquement à l'ensemble d'électrodes, et faisant partiellement saillie depuis l'organe extérieur en formant une portion exposée hors de l'organe extérieur,
dans laquelle la borne d'électrode comprend un métal ayant une résistance à la corrosion supérieure à celle d'un métal constituant la borne d'électrode,
**caractérisée en ce qu'**uniquement la portion de la borne d'électrode exposée hors de l'organe extérieur de la batterie secondaire au lithium est entièrement plaquée avec du métal ayant la résistance à la corrosion la plus élevée.

2. Batterie secondaire au lithium selon la revendication 1, dans laquelle la borne d'électrode est constituée d'aluminium.

3. Batterie secondaire au lithium selon la revendication 2, dans laquelle la borne d'électrode est plaquée avec au moins l'un sélectionné dans le groupe se composant de cobalt, cuivre, nickel, platine, manganèse, zinc, fer, étain, argent et or, ayant une résistance à la corrosion supérieure à celle de l'aluminium.

4. Batterie secondaire au lithium selon la revendication 1, dans laquelle la borne d'électrode est constituée de cuivre.

5. Batterie secondaire au lithium selon la revendication 4, dans laquelle la borne d'électrode est plaquée avec au moins l'un sélectionné dans le groupe se composant de nickel, platine, argent et or, ayant une résistance à la corrosion supérieure à celle du cuivre.

6. Batterie secondaire au lithium selon l'une quelconque des revendications 1 à 5, dans laquelle la batterie secondaire au lithium est une batterie secondaire de type à étui.

7. Module de batterie ou bloc-batterie, comprenant :
deux ou plus batteries secondaires au lithium selon les revendications 1 à 6, raccordées électriquement l'une à l'autre à l'intérieur de celui-ci.
